# EUROPÄISCHE PATENTSCHRIFT

(11) **EP 0 736 755 B1**
(45) Veröffentlichungstag und Bekanntmachung des Hinweises auf die Patenterteilung: **11.08.1999**
(21) Anmeldenummer: 96103916.1
(22) Anmeldetag: 13.03.1996
(51) Int. Cl.: G01L 5/00, E06C 5/36, B66C 23/78, B60S 9/02

(54) **Vorrichtung zur Druckkraftmessung**
Device for measuring pressure force
Dispositif pour mesurer la force de pression

(30) Priorität: 06.04.1995 DE 19512868
(43) Veröffentlichungstag der Anmeldung: 09.10.1996
(73) Patentinhaber: Metz Feuerwehrtechnik GmbH & Co. KG, 76185 Karlsruhe (DE)
(72) Erfinder: Ksoll, Peter, Dr., D-76770 Hatzenbühl (DE)
(74) Vertreter: Lempert, Jost, Dipl.-Phys. Dr. rer.nat.

(56) Entgegenhaltungen:
- EP-B- 0 179 329
- DE-A- 2 609 631
- DE-A- 3 431 526
- JP-A- 5 024 789
- JP-A- 6 344 873

## Beschreibung

Die Erfindung betrifft eine Vorrichtung zur Druckkraftmessung.

Aus der DE 37 43 546 A1 ist bekannt, hydraulische Bodenabstützzylinder an einen hydraulischen Druckschalter anzuschließen. Die Druckkraftmessung kann hier nicht mit der erforderlichen Genauigkeit erfolgen, insbesondere beeinträchtigen Reibungskräfte und Hysteresen das Meßergebnis; außerdem ist eine solche Meßeinrichtung nicht langzeitstabil. Darüber hinaus kann das Unterschreiten einer unteren Grenzlast nicht mit hinreichender Genauigkeit erfaßt werden.

Ähnliches gilt für eine aus der DE 28 36 337 C2 bekannte Meßvorrichtung mit zu einer Brückenschaltung verbundenen Dehnungsmeßstreifen als Stützkraftmeßgeräten, da diese eine relativ steile Kennlinie aufweisen und im übrigen nicht langzeitstabil sind.

Der Erfindung liegt daher die Aufgabe zugrunde, eine Vorrichtung zur Druckkraftmessung zu schaffen, die bei einer Druckkraftmessung über einen weiten Bereich sowohl eine genaue Erfassung des Unterschreitens einer vorgegebenen Druckkraft als auch diese Lasterfassung durch eine Wegerfassung vor allem im unteren Lastbereich zu überprüfen ermöglicht.

Erfindungsgemäß wird die genannte Aufgabe bei einer Vorrichtung der eingangs genannten Art dadurch gelöst, daß eine erste Kraftmeßeinrichtung mit definierter, relativ flacher Kennliniencharakteristik ihres Federelements und eine zweite Kraftmeßeinrichtung mit relativ steiler Kennliniencharakteristik ihres Federelements in Reihe angeordnet sind und der Kompressionsweg des Federelements der ersten Kraftmeßeinrichtung begrenzt ist, so daß die erste Kraftmeßeinrichtung nur kleinere Kräfte des gesamten Belastungsbereichs zusätzlich wegabhängig erfaßt und die zweite Kraftmeßeinrichtung immer im gesamten Belastungsbereich verformungsabhängig eine Kraft bestimmt.

Durch die erfindungsgemäße Ausgestaltung wird eine Vorrichtung zur Druckkraftmessung mit unterschiedlicher Federcharakteristik und einstellbarer, weggesteuerter Kraftbestimmung geschaffen. Durch die hohe Federsteifigkeit des zweiten Federelements gegenüber dem ersten Federelement kann vereinfachend der Relativweg des ersten Federelements als absolute Größe angesehen werden, so daß eine Überprüfung bzw. Eichung der gesamten Vorrichtung im Kennlinienbereich mit der geringen Steigung und geringen Kraftänderung bei relativ großen Wegen des ersten Federelements der ersten Kraftmeßeinrichtung durchgeführt werden kann. Darüber hinaus läßt sich bei geringen Kräften durch einen die Bewegung des ersten Federelements erfassenden Schalter eine Grenzlast aufgrund des flachen Kennlinienbereichs sehr feinfühlig vorgeben und damit eine sehr genaue Messung des Unterschreitens der Grenzlast durch die aktuelle Abstützkraft erreichen. Die erfindungsgemäße Vorrichtung kann beispielsweise bei Abstützauslegern eines Fahrzeugs eingesetzt werden, wobei das Unterschreiten der Abstützkraft als Standunsicherheit des Fahrzeugs interpretiert wird und der Betrieb eines Auslegers desselben eingestellt bzw. lediglich eingeschränkte Bewegungen zugelassen werden. Weiterhin lassen sich durch die zweite Kraftmeßeinrichtung Lasten bzw. Kräfte über einen weiten Bereich erfassen, wobei auch ein oberer Grenzwert festgelegt werden kann, der bei Erreichen gegebenenfalls auch eine Abschaltung bzw. Einschränkung der Bewegung des Auslegersystems zur Folge hat, wenn ein maximaler Bodendruck, der durch einen solchen Meßwert repräsentiert wird, nicht überschritten werden soll.

Das erste Federelement kann in verschiedenartiger Weise ausgestaltet sein, so beispielsweise als Schraubenfeder, als Tellerfederpaket oder aber als elastischer Block. Als Sensoren für die für die einwirkende Last repräsentative Wegerfassung kann die erste Kraftmeßeinrichtung berührungslose Schalter oder aber auch mechanische Schalter in verschiedenartiger Ausgestaltung aufweisen. Die zweite Kraftmeßeinrichtung wird vorzugsweise als Kraftmeßdose mit Dehnungsmeßstreifen ausgebildet.

Gemäß bevorzugter weiterer Ausgestaltung ist vorgesehen, daß die erste Kraftmeßeinrichtung mehrere auf gleicher axialer Höhe angeordnete Schalter zur redundanten Wegerfassung aufweist und/oder daß die erste Kraftmeßeinrichtung mehrere in axialer Richtung versetzt angeordnete Schalter zur Erfassung mehrerer Schaltpunkte aufweist, wobei insbesondere die Schalter gleichmäßig über den Umfang der Vorrichtung verteilt angeordnet sind; die Schalter sind dazu insgesamt schraubenförmig angeordnet.

Eine weitere bevorzugte Ausgestaltung sieht vor, daß die Schaltpunkte der ersten Kraftmeßeinrichtung einstellbar sind. Dies kann entweder dadurch geschehen, daß der Schalter oder die Schalter exzentrisch in in einer Außenwandung drehbar geführten Hülsen bzw. Schrauben angeordnet sind, wobei insbesondere die Hülse bzw. Schraube in einer vorgegebenen Stellung blockierbar ist, oder aber dadurch, daß ein bewegliches, in axialer Richtung einstellbares Geberelement vorgesehen ist, wobei das Geberelement insbesondere ein mit den Schaltern der ersten Kraftmeßeinrichtung zusammenwirkender, axial beweglicher Stößel sein kann.

Schalt- und Meßelemente werden vorzugsweise in einem ein Absolutsystem repräsentierenden äußeren Zylinder oder Zylinderbodeneinsatz der erfindungsgemäßen Vorrichtung angeordnet, wodurch sichergestellt wird, daß die stromversorgenden Meßleitungen zu den Schalt- und Meßelementen keine zusätzlichen Bewegungen ausführen. Hierdurch wird die Sicherheit der erfindungsgemäßen Vorrichtung erhöht.

Wenn die erfindungsgemäße Vorrichtung in bevorzugter Ausgestaltung einen (kreis-)zylindrischen Führungszylinder aufweist, kann der in diesem geführte Kolben um seine Achse frei drehbar sein und bei entsprechender Reibungslagerung bzw. Führung der ersten Federelemente ergibt sich Invarianz gegenüber Kolbendrehung und äußerem Kraftangriff.

Die erfindungsgemäße Vorrichtung ermöglicht die Realisierung mehrerer weggesteuerter Schaltpunkte und erlaubt die Wahl von Federelementen innerhalb eines Vorspannbereichs mit charakteristischen, konstruktiv bestimmbaren Kennlinien.

Wenn in bevorzugter Ausgestaltung vorgesehen ist, daß ein in einem Führungszylinder beweglicher Kolben mit einem Kugelelement versehen ist, kann die Kraftrichtung auf einer Kegelmantelfläche unter einem beliebigen Winkel < 90° eingeleitet werden, wobei die erfindungsgemäße Vorrichtung eine reine axiale Komponente der angreifenden Kraft mißt, während die Querkraft vom Führungszylinder aufgenommen wird.

Durch die zusätzliche Ausgestaltung, daß das Kugelelement in einer kalottenförmigen Lagerung einer Bodenplatte schwenkbar gelagert ist, erlaubt die Vorrichtung eine praktisch hydrostatische Lagerung des Gesamtsystems.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im einzelnen erläutert sind. Dabei zeigt:
- Fig. 1: eine erste Ausführungsform der erfindungsgemäßen Vorrichtung im vertikalen Längsschnitt;
- Fig. 2: eine andere bevorzugte Ausführungsform der erfindungsgemäßen Vorrichtung, ebenfalls im vertikalen Längsschnitt;
- Fig. 3: eine weitere bevorzugte Ausführungsform der erfindungsgemäßen Vorrichtung, auch im vertikalen Längsschnitt;
- Fig. 4: eine mit einem Stößel als Geberelement versehene Ausgestaltung; und
- Fig. 5: eine abgewandelte Ausführungsform der Ausgestaltung nach Fig. 4.

Die erfindungsgemäße Vorrichtung zur Druckkraftmessung 1 weist einen äußeren Führungszylinder 2 auf, der die im weiteren erläuterten Funktionselemente aufnimmt. Der Führungszylinder 2 ist beispielsweise selbst am Ende einer Kolbenstange eines ausfahrbaren Abstützbeines - oder allgemein an dessen Fuß - eines Abstützauslegers eines Fahrzeugs, wie eines Drehleiter-, Hubrettungs- oder Hubarbeitsfahrzeugs, ausgebildet.

Im Führungszylinder 2 ist ein in diesem axial entlang dessen Achse A verschieblicher Kolben 3 angeordnet. Der Kolben 3 weist an seiner Unterseite ein eingepaßtes oder über einen Ansatz 4 eingeschraubtes Kugelelement 5 auf, welches im dargestellten Ausführungsbeispiel in einem Bodenteller 6 des Auslegers allseitig begrenzt verschwenkbar gelagert ist.

Das Kugelelement 5 ist von einem Balg 10, vorzugsweise aus Gummi (gegebenenfalls mit einer Verstärkungseinlage aus Draht), umgeben. Der Balg ist einerseits am Bodenteller 6, andererseits an einem Flanschteil 7 des Führungszylinders 2 befestigt. Der Balg schützt die Vorrichtung.

Er schränkt die Rotation der Kolbeneinheit 3, 5 ein, läßt aber eine begrenzte Verdrehung zu. Nach Entlasten der Bodenplatte 6 und Abheben richtet er diese wieder in vorgegebener Weise aus.

Der Kolben 3 wird durch das mit dem Führungszylinder 2 - beispielsweise durch Verschraubung - fest verbundene Flanschteil 7 untergriffen und daran gehindert, aus dem Führungszylinder 2 auszutreten.

Im Bereich des Kolbens 3 ist der Führungszylinder 2 auf seiner Innenseite mit einer Hülse 8 oder einer Auflage zur Reibungsverminderung versehen, die beispielsweise aus PTFE bestehen kann. Auch eine Kugellagerung als Linearlager wäre möglich.

In eine Ringnut 9 des Kolbens 3 greift zunächst eine Schraubenfeder 11 als ein erstes Federelement einer ersten Kraftmeßeinrichtung 12. Die Schraubenfeder 11 liegt in ihrem unteren Bereich am Boden der Ausnehmung 9 des Kolbens 3 an, während sie auf ihrer Oberseite eine bewegliche Scheibe 13 trägt, die den oberen Bereich der Schraubenfeder 11 gegebenenfalls durch einen Absatz 14 umgreift. Auf der Oberseite der Scheibe 13, gegebenenfalls im Bereich des Absatzes 14, sitzt auf dieser eine zweite Kraftmeßeinrichtung 15 mit einem zweiten Federelement 16 in Form einer ringförmigen Kraftmeßdose und mit einem Dehnmeßstreifen 17 als Sensorteilen. Die Oberseite des zweiten Federelements 16 liegt an einer fest mit dem Führungszylinder 2 verbundenen Abdeckung 18 als Teil des Endes einer Kolbenstange des Fußes des Abstützauslegers an.

Im Bewegungsbereich der Oberkante des Kolbens 3 sind in der Wandung des Führungszylinders 2 berührungslose Schalter 22 angeordnet, die die Näherung der Oberkante des Kolbens 3 genau erfassen können. Im dargestellten Ausführungsbeispiel sind die Schalter 22 auf gleicher Höhe des Zylinders 2 angeordnet, so daß eine redundante Erfassung des Kolbens 3 vorgenommen werden kann, d.h. beispielsweise einer der beiden Schalter ausfallen kann, dennoch eine Bewegungserfassung durch den anderen Schalter erfolgt bzw. die Meßergebnisse beider Schalter zur gegenseitigen Überprüfung verwendet werden können.

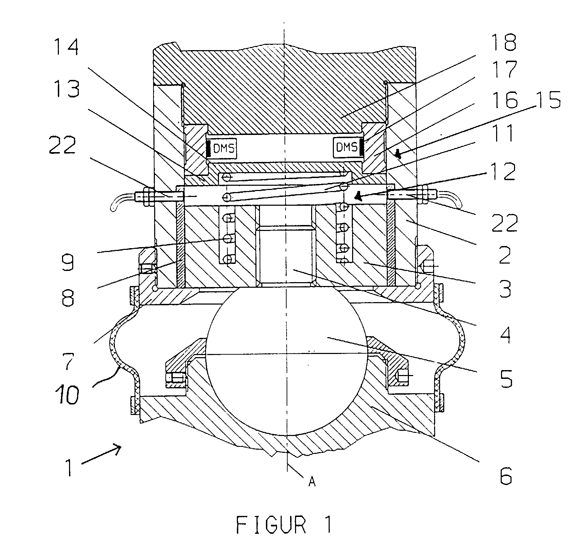

In der Fig. 1 ist der Kolben 3 in seiner völlig entlasteten Stellung dargestellt. Ist das mit der erfindungsgemäßen Vorrichtung 1 versehene Auslegerbein ausgefahren und drückt seine Bodenplatte 6 gegen den Boden, so wird der Kolben 3 aufgrund der Weichheit der Feder 11 an der Scheibe 13 anliegen und weiterhin das erste Federelement je nach einwirkenden Kräften komprimieren. Löst sich der Kolben 3 von der Scheibe 13 aufgrund einer Entlastung der einwirkenden Kräfte, so bewegt er sich entlang der berührungslosen Schalter 21, 22, entfernt sich von diesen, die Schalter stellen dies fest und geben ein Signal dahingehend aus, daß aufgrund zu geringer Stützkräfte des entsprechenden Bodenauslegers die Standfestigkeit des Fahrzeugs gefährdet ist. Bewegungen einer Drehleiter oder eine Hubarms, mit denen das Fahrzeug versehen ist, werden beendet bzw. ein Zurückfahren in eine sichere Position eingeleitet bzw. nur entlastende Bewegungen zugelassen.

Über die zweite Kraftmeßeinrichtung mit dem Dehnmeßstreifen kann weiterhin ein oberer Grenzwert festgelegt werden, der bei Erreichen ebenso eine Abschaltung bzw.

Einschränkung der Bewegung des Auslegersystems zur Folge hat. Der Grund liegt darin, daß ein Meßwert, der als maximaler Bodendruck zwischen Bodenteller und Untergrund interpretiert wird, nicht überschritten werden soll.

Bei den im weiteren beschriebenen Ausgestaltungen werden gleiche Teile mit gleichen Bezugszeichen bezeichnet und nicht erneut beschrieben. Insofern wird auf die Beschreibung der Fig. 1 verwiesen. Im übrigen können einzelne Merkmale einer Ausgestaltung auch bei anderen Ausgestaltungen vorgesehen sein.

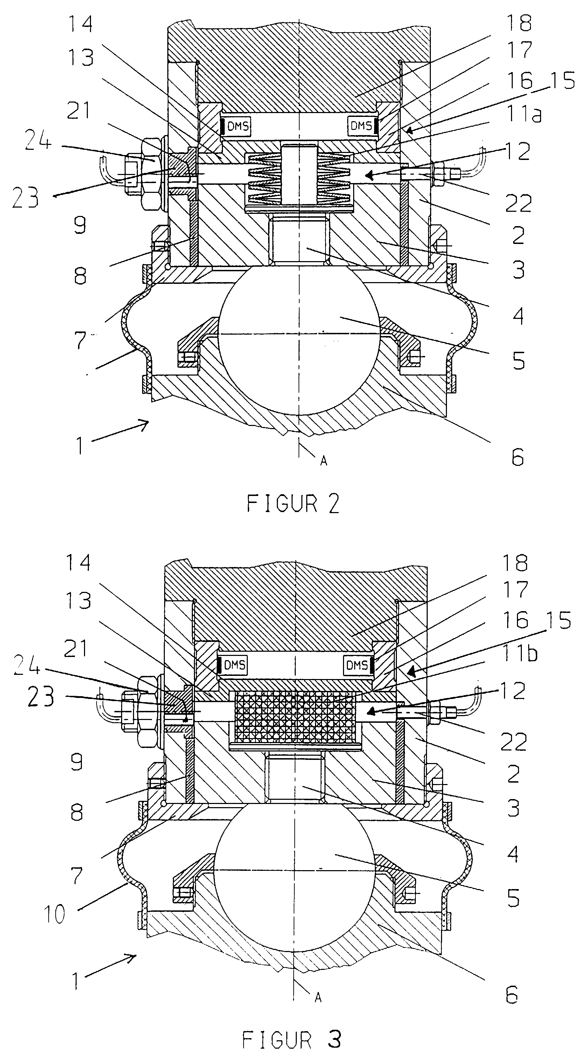

Die Ausgestaltung der Fig. 2 weist in Abweichung von der Fig. 1 zunächst ein Tellerfederpaket 11 als Federelement auf. Weiterhin ist hier ein Schalter 21 einstellbar angeordnet. Ein Schalter 21 ist hierzu exzentrisch in einer drehbaren Hülse bzw. Schraube gelagert. Durch entsprechende Drehung kann der gewünschte Schaltpunkt genau eingestellt werden. Liegt der Schaltpunkt konstruktiv fest, kann der Schalter 21 in geeigneter Weise fixiert werden.

Bei der Ausgestaltung der Fig. 3 ist als Federelement ein elastischer Block 11b vorgesehen, der zusätzlich gewisse Dämpfungseigenschaften aufweist und eine Schwingungsentkopplung bewirkt. Er kann Gummi, Polymer und/oder Drahtkissen aufweisen.

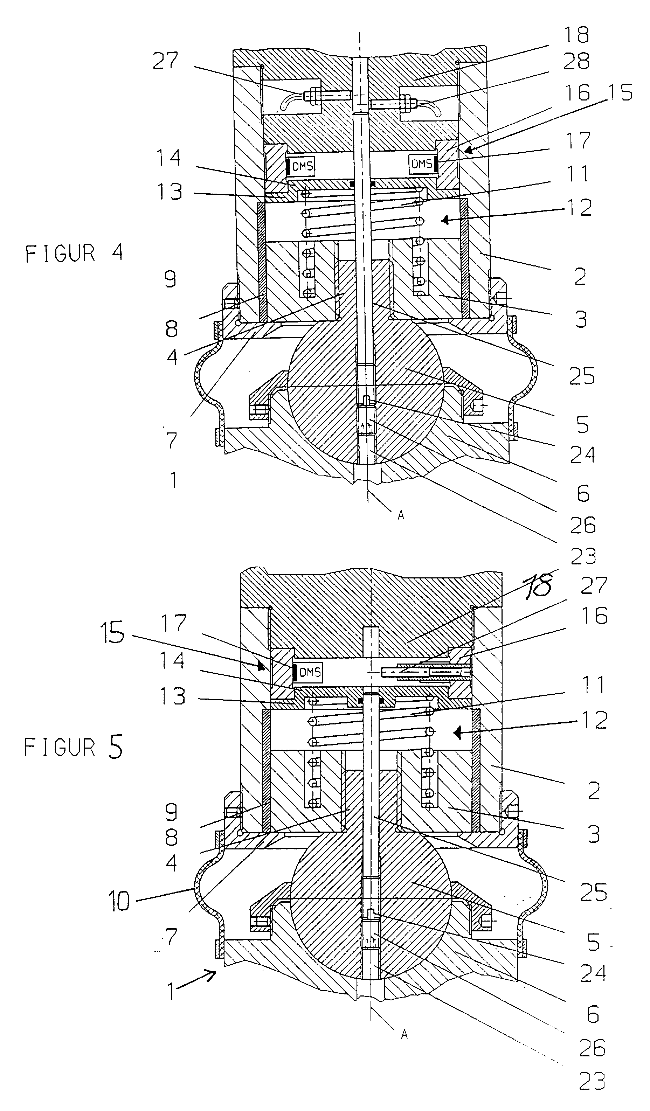

Die Fig. 4 zeigt eine weitere Ausgestaltung der erfindungsgemäßen Vorrichtung. Gleiche Teile werden mit gleichen Bezugszeichen bezeichnet. Die Ausgestaltung weist zunächst in gleicher Weise den Führungszylinder 2 und den in diesem geführten Kolben 3 auf. Als Federelement ist wieder eine Schraubenfeder 11' vorgesehen, die wiederum die Scheibe 13 trägt, auf der die zweite Kraftmeßeinrichtung 15 mit einer Kraftmeßdose 16 mit relativ steifer Federkonstante und mit Dehnmeßstreifen 17 angeordnet ist. In der Kugel 5 und im diese im Kolben 3 festlegenden Ansatz 4 befindet sich eine axiale Gewindebohrung 23, in der ein über einen stirnseitigen Schlitz 24 einstellbarer Stößel 25 als Geberelement angeordnet ist, der in den Innenraum des Führungszylinders 2 und dabei durch die Scheibe 13 hindurchragt. Die Bohrung 23 ist außenseitig durch eine Schutzschraube 26 verschlossen.

Dem Stößel 25 sind in dem Ende 18 der Kolbenstange des Abstützzylinders festgelegte Schalter 27, 28 zugeordnet, die zur Ermöglichung mehrerer Schaltpunkte im dargestellten Ausführungsbeispiel auf verschiedener axialer Höhe angeordnet sind. Statt der beiden dargestellten Schalter 27, 28 können auch mehrere, möglichst gleichmäßig über den Umfang verteilte Geber vorgesehen sein, so daß weitere Schaltpunkte detektiert werden können. Durch die gleichmäßige Anordnung der Geber über den Umfang wird die Gesamtsteifigkeit des Führungszylinders in seiner axialen Richtung kaum beeinflußt.

Bei der Ausgestaltung der Fig. 5 erstrecken sich die Schalter 27 von der Wandung des Führungszylinders 2 durch die Kraftmeßdose 16. Sie sind dabei zwischen den Dehnungsmeßstreifen 17 angeordnet. Hierdurch wird eine sehr kompakte Bauweise erreicht.

Die Funktion ist grundsätzlich wieder die gleiche wie die bei der Fig. 1 beschriebene.

## Patentansprüche

1. Vorrichtung zur Druckkraftmessung, wobei eine erste Kraftmeßeinrichtung (12) mit definierter, relativ flacher Kennliniencharakteristik ihres Federelements (11, 11') und eine zweite Kraftmeßeinrichtung (15) mit relativ steiler Kennliniencharakteristik ihres Federelements (16) in Reihe angeordnet sind und der Kompressionsweg des Federelements (11) der ersten Kraftmeßeinrichtung (12) begrenzt ist, so daß die erste Kraftmeßeinrichtung (12) nur kleinere Kräfte des gesamten Belastungsbereichs zusätzlich wegabhängig erfaßt und die zweite Kraftmeßeinrichtung (15) immer im gesamten Belastungsbereich verformungsabhängig eine Kraft bestimmt.

2. Vorrichtung nach Anspruch 1, dadurch gekennzeichnet, daß das Federelement (11) der ersten Kraftmeßeinrichtung (12) eine Schraubenfeder ist.

3. Vorrichtung nach Anspruch 1, dadurch gekennzeichnet, daß das Federelement der ersten Kraftmeßeinrichtung (12) ein Tellerfederpaket (11') ist.

4. Vorrichtung nach Anspruch 1, dadurch gekennzeichnet, daß das Federelement der ersten Kraftmeßeinrichtung (12) ein elastischer Block ist.

5. Vorrichtung nach einem der vorangehenden Ansprüche, dadurch gekennzeichnet, daß die zweite Kraftmeßeinrichtung (15) Kraftmeßdosen (16) mit Dehnungsmeßstreifen (17) aufweist.

6. Vorrichtung nach einem der vorangehenden Ansprüche, dadurch gekennzeichnet, daß mehrere erste Kraftmeßeinrichtungen (12) in Brückenschaltung miteinander verbunden sind.

7. Vorrichtung nach einem der vorangehenden Ansprüche, dadurch gekennzeichnet, daß die erste Kraftmeßeinrichtung (12) mindestens einen berührungslosen Schalter (21, 22) aufweist.

8. Vorrichtung nach einem der Ansprüche 1 bis 6, gekennzeichnet durch mechanische Schalter der ersten Kraftmeßeinrichtung (12).

9. Vorrichtung nach einem der vorangehenden Ansprüche, dadurch gekennzeichnet, daß die erste Kraftmeßeinrichtung (12) mehrere auf gleicher axialer Höhe angeordnete Schalter (21, 22) zur redundanten Wegerfassung aufweist.

10. Vorrichtung nach einem der vorangehenden Ansprüche, dadurch gekennzeichnet, daß die erste Kraftmeßeinrichtung (12) mehrere in axialer Richtung versetzt angeordnete Schalter (21, 22, 27, 28) zur Erfassung mehrerer Schaltpunkte aufweist.

11. Vorrichtung nach Anspruch 9 oder 10, dadurch gekennzeichnet, daß die Schalter (21, 22) über den Umfang der Vorrichtung gleichmäßig verteilt angeordnet sind.

12. Vorrichtung nach einem der vorangehenden Ansprüche, dadurch gekennzeichnet, daß die Schaltpunkte der ersten Kraftmeßeinrichtung (12) einzeln einstellbar sind.

13. Vorrichtung nach Anspruch 12, dadurch gekennzeichnet, daß der Schalter oder die Schalter (21, 22) exzentrisch in verdrehbar geführten Schraubverbindungen angeordnet sind.

14. Vorrichtung nach Anspruch 13, dadurch gekennzeichnet, daß die Hülse in einer vorgegebenen Stellung blockierbar ist.

15. Vorrichtung nach Anspruch 13, gekennzeichnet durch ein bewegliches, in axialer Richtung einstellbares Geberelement (25) in Form eines axial beweglichen Stößels.

16. Vorrichtung nach Anspruch 15, gekennzeichnet durch durch einen Meßzylinder (16) der zweiten Kraftmeßeinrichtung ragende, mit dem Stößel (25) zusammenwirkende Schaltelemente (30, 27).

17. Vorrichtung nach einem der vorangehenden Ansprüche, dadurch gekennzeichnet, daß ein in einem Führungszylinder (2) beweglicher Kolben (3) mit einem Kugelelement (5) versehen ist.

18. Vorrichtung nach Anspruch 17, dadurch gekennzeichnet, daß das Kugelelement (5) in einer kalottenförmigen Lagerung einer Bodenplatte (6) schwenkbar gelagert ist.

19. Vorrichtung nach Anspruch 17 oder 18, dadurch gekennzeichnet, daß das Kugelelement (5) von einem Balg (10) umgeben ist.

## Claims

1. Device for measuring pressure force, in which a first dynanometer (12) with a clearly defined, relatively shallow characteristic curve of its spring element (11, 11') and a second dynanometer (15) with a relatively steep characteristic curve of its spring element (16) are arranged in series and the compression path of the spring element (11) of the first dynanometer (12) is limited, so that the first dynanometer (12) only determines additionally in displacement-dependent manner smaller forces of the complete load range and the second dynanometer (15) always determines a force in deformation-dependent manner throughout the load range.

2. Device according to claim 1, characterized in that the spring element (11) of the first dynanometer (12) is a helical spring.

3. Device according to claim 1, characterized in that the spring element of the first dynanometer (12) is a spring washer set (11').

4. Device according to claim 1, characterized in that the spring element of the first dynanometer (12) is an elastic block.

5. Device according to one of the preceding claims, characterized in that the second dynanometer (15) has load cells (16) with strain gauges (17).

6. Device according to one of the preceding claims, characterized in that several first dynanometers (12) are interconnected in bridge connection.

7. Device according to one of the preceding claims, characterized in that the first dynanometer (12) has at least one contactless switch (21, 22).

8. Device according to one of the claims 1 to 6, characterized by mechanical switches of the first dynanometer (12).

9. Device according to one of the preceding claims, characterized in that the first dynanometer (12) has several switches (21, 22) arranged at the same axial height for redundant displacement determination.

10. Device according to one of the preceding claims, characterized in that the first dynanometer (12) has several axially displaced switches (21, 22, 27, 28) for determining several switching points.

11. Device according to claim 9 or 10, characterized in that the switches (21, 22) are uniformly distributed over the circumference of the device.

12. Device according to one of the preceding claims, characterized in that the switching points of the first dynanometer (12) are individually adjustable.

13. Device according to claim 12, characterized in that the switch or switches (21, 22) are arranged eccentrically in rotatably guided screw connections.

14. Device according to claim 13, characterized in that the sleeve can be locked in a predetermined position.

15. Device according to claim 13, characterized by a movable, axially adjustable primary element (25) in the form of an axially movable ram.

16. Device according to claim 15, characterized by switching elements (30, 27), cooperating with the ram (25) and projecting through a measuring cylinder (16) of the second dynanometer.

17. Device according to one of the preceding claims, characterized in that a plunger (3) movable in a guide cylinder (2) is provided with a ball element (5).

18. Device according to claim 17, characterized in that the ball element (5) is pivotably mounted in a spherical bearing of a base plate (6).

19. Device according to claim 17 or 18, characterized in that the ball element (5) is surrounded by a bellows (10).

## Revendications

1. Dispositif pour mesurer une contrainte de pression, dans lequel un premier capteur de force (12) dont la courbe des caractéristiques de fonctionnement de son élément élastique (11,11') est définie, relativement plate, et un deuxième capteur de force (15) dont la courbe des caractéristiques de fonctionnement de son élément élastique (16) est relativement inclinée, sont disposés en parallèle et dans lequel le cycle de compression de l'élément élastique (11) du premier capteur de force (12) est limité, de sorte que le premier capteur de force (12) ne détecte que les forces moins importantes de l'ensemble de la zone de contrainte, fonction de la course, et le deuxième capteur de force (15) mesure toujours une force fonction de la déformation dans l'ensemble de la zone de contrainte.

2. Dispositif selon la revendication 1, caractérisé en ce que l'élément élastique (11) du premier capteur de force (12) est un ressort hélicoïdal.

3. Dispositif selon la revendication 1, caractérisé en ce que l'élément élastique du premier capteur de force (12) est un empilement de rondelles Belleville (11').

4. Dispositif selon la revendication 1, caractérisé en ce que l'élément élastique du premier capteur de force (12) est un bloc élastique.

5. Dispositif selon l'une quelconque des revendications précédentes, caractérisé en ce que le deuxième capteur de force (15) présente des capteurs dynamométriques (16) comprenant des jauges d'allongement (17).

6. Dispositif selon l'une quelconque des revendications précédentes, caractérisé en ce que plusieurs premiers capteurs de force (12) sont reliés entre eux par un montage en pont.

7. Dispositif selon l'une quelconque des revendications précédentes, caractérisé en ce que le premier capteur de force (12) présente au moins un détecteur de proximité (21,22).

8. Dispositif selon l'une quelconque des revendications 1 à 6, caractérisé par des détecteurs mécaniques du premier capteur de force (12).

9. Dispositif selon l'une quelconque des revendications précédentes, caractérisé en ce que le premier capteur de force (12) présente plusieurs détecteurs (21,22) disposés à la même hauteur axiale pour la détection redondante de la course.

10. Dispositif selon l'une quelconque des revendications précédentes, caractérisé en ce que le premier capteur de force (12) présente plusieurs détecteurs (21,22,27,28) disposés décalés en direction axiale pour la détection de plusieurs points de contact de commutation.

11. Dispositif selon la revendication 9 ou 10, caractérisé en ce que les détecteurs (21,22) sont disposés répartis régulièrement sur le périmètre du dispositif.

12. Dispositif selon l'une quelconque des revendications précédentes, caractérisé en ce que les points de contact de détection du premier capteur de force (12) sont réglables individuellement.

13. Dispositif selon la revendication 12, caractérisé en ce que le ou les détecteur(s) (21,22) sont disposés excentrés dans des raccords à vis guidés et déformables par torsion.

14. Dispositif selon la revendication 13, caractérisé en ce que la douille peut être bloquée dans une position prédéfinie.

15. Dispositif selon la revendication 13, caractérisé par un élément transmetteur (25) mobile, réglable en direction axiale sous la forme d'un coulisseau mobile axialement.

16. Dispositif selon la revendication 15, caractérisé par des éléments de circuit (30,27) faisant saillie à travers un cylindre de mesure (16) du deuxième capteur de force et coopérant avec le coulisseau (25).

17. Dispositif selon l'une quelconque des revendications précédentes, caractérisé en ce qu'un piston (3) mobile dans un cylindre de guidage (2) est muni d'un élément sphérique (5).

18. Dispositif selon la revendication 17, caractérisé en ce que l'élément sphérique (5) est monté basculant dans un logement en forme de calotte d'une plaque de fond (6).

19. Dispositif selon la revendication 17 ou 18, caractérisé en ce que l'élément sphérique (5) est entouré d'un soufflet (10).
